Europäisches Patentamt

**(19)** European Patent Office

Office européen des brevets

**(11)** Publication number : **0 444 338 B1**

**(12)** # EUROPEAN PATENT SPECIFICATION

**(45)** Date of publication of patent specification : 02.06.93 Bulletin 93/22

**(51)** Int. Cl.$^5$ : **B01J 2/04,** F28C 3/14

**(21)** Application number : **90302189.7**

**(22)** Date of filing : **01.03.90**

**(54)** Method and apparatus for cooling particulate solids.

**(43)** Date of publication of application : **04.09.91 Bulletin 91/36**

**(45)** Publication of the grant of the patent : **02.06.93 Bulletin 93/22**

**(84)** Designated Contracting States : **BE DE FR GB IT NL**

**(56)** References cited : **NL-A- 8 501 672**

**(73)** Proprietor : **COMINCO LTD.**
**2600-200 Granville Street**
**Vancouver British Columbia V6C 2R2 (CA)**

**(72)** Inventor : **Mueller, Markus M.**
**207-617-15th Avenue S.W.**
**Calgary, Alberta T2R 0R4 (CA)**

**(74)** Representative : **Coxon, Philip et al**
**Eric Potter & Clarkson St. Mary's Court St. Mary's Gate**
**Nottingham NG1 1LE (GB)**

EP 0 444 338 B1

Jouve, 18, rue Saint-Denis, 75001 PARIS

## Description

This invention relates to the cooling of solids and, more particularly to a method and apparatus for the cooling of particulate solids such as fertilizers.

BACKGROUND OF THE INVENTION

The manufacture of particulate fertilizers is generally carried out by agglomeration or prilling processes whereby particulates such as prills or granules of the fertilizer are formed. There are numerous agglomeration and prilling processes known for the manufacture of fertilizers such as ammonium nitrate, urea, potash, phosphates and mixtures thereof. Agglomeration processes are generally carried out in paddle mixers, pug mills, rotary drums, pans or fluidized beds. Prilling processes are usually carried out in prilling vessels such as prilling towers.

In many cases it is necessary to cool the particulates so formed to a reasonably low temperature to avoid undesirable phenomena such as caking. The cooling of particulates has been conventionally carried out with cooling air in a cooling vessel such as a rotating drum or a fluidized bed. Because of the intense motions and turbulence of the particulates in such vessels, the particulates are subject to attrition and abrasion that result in a breakdown of the particulates with the formation of fines and dust. This breakdown is highly undesirable. Not only does the formation of fines and dust reduce the efficiency of the above-mentioned processes, but the additional treatments that are necessary for the removal of fines and dust from the product add considerably to the costs. The fines and dust must be screened from the product, and the cooling air, which contains a portion of the dust, must be treated for the substantial removal of the dust before the air can be returned to the atmosphere.

In order to reduce attrition and abrasion it would be necessary to avoid the intense motion and turbulence during cooling. Such intense notion appears to have been somewhat reduced in the cooler for hot lime disclosed in US Patent 3 397 460. The cooler includes an indirect heat exchanger comprising a plurality of horizontal air ducts mounted in tiers to form vertical passages for the lime, the tiers being connected with transfer boxes, and a direct heat exchanger for cooling lime received from the passages with air. This cooler and its tiers of interconnected air ducts is of a rather complex construction and the free falling material and the direct heat exchange still would cause considerable motion with resultant attrition.

In heat exchange between two liquids, or liquids and gases, use is often made of one or more spaced heat exchanger plates over which one fluid flows and through which the cooling fluid passes in indirect heat exchange. Such plates are used in vaporizers, dryers, heaters, condensors and coolers, and are based on disclosures such as made in US Patent 3 458 917. A heat exchanger plate according to this patent consists of two flat plates that are circumferentially seam-welded together, are provided with a pattern of spot or seam welds or both and are expanded between welds by introducing high-pressure fluid into the spaces between welds. The expanded plate has a smooth outside surface with numerous small pillow-like embossments between spot welds. The pillows are hollow and interconnected to provide flow channels for a cooling fluid. The pattern of seam welds may provide a serpentine passage for the cooling fluid through the plate. An inlet and an outlet for the fluid are attached to the plate. According to a catalogue of the Paul Mueller Company, the plates are used in various shapes and configurations, one of those being in packs of spaced plates with common inlet and outlet headers. No mention is made of cooling solids or particulate materials.

Another apparatus and method for cooling particulate material is disclosed in DE-A-1508564. In this apparatus and method particulate material is caused to fall between plates of a heat exchanger to be cooled by indirect heat exchange with a fluid. However, there is no indication in DE-A-1508564 that a flooded state with respect to the particulates should be maintained in the heat exchanger. Furthermore, the apparatus described therein does not disclose means for removal of particulates from the apparatus including control means for controlling the discharging of particulates from the heat exchanger.

## SUMMARY OF THE INVENTION

It has now been surprisingly found that the attrition and abrasion of solid particulates, such as particulate fertilizers, can be substantially eliminated during cooling. More specifically, hot particulates are readily cooled to a desired lower temperature by flowing particulates downward between expanded heat exchange plates through which a cooling fluid is passed.

The apparatus according to the invention comprises a heat exchange housing containing a multiplicity of parallel, spaced, vertical, expanded heat exchanger plates each having an inlet and an outlet, the inlets and outlets being connected into common inlet and outlet headers. A feed hopper is attached to the housing and is positioned above the multiplicity of plates and in communication with the spaces between the plates. A discharge hopper is attached to the lower end of the housing, and is positioned below the multiplicity of plates and in communication with the spaces between the plates. The discharge hopper has means for receiving cooled fertilizer particulates and includes means for the controlled discharging of cooled particulates.

Particulates to be cooled are fed into the feed hopper and descend by gravity between the heat exchanger plates through which cooling fluid flows preferably in a direction countercurrent to the downward flow of particulates. The particulates are cooled and are collected in the discharge hopper from which they are discharged in a controlled fashion. The flow of particulates through the cooler is controlled to maintain the cooler in a flooded condition with respect to the particulates so that maximum cooling capacity is used and mass flow conditions are maintained. The flooded condition ensures that the particulates descend through the cooler substantially without the turbulence and the motion that would cause attrition and abrasion.

It is, therefore, an object of the present invention to provide a method for the cooling of particulates without attrition and abrasion.

It is another object to provide an apparatus for the cooling of particulates.

Accordingly, there is provided a method for the cooling of particulates which comprises passing particulates to be cooled downward by gravity between at least two parallel, spaced heat exchanger plates; passing a suitable cooling fluid through said plates; collecting particulates after passing between said plates; and maintaining said plates in a flooded state with respect to particulates therebetween whereby attrition and abrasion of particulates are substantially eliminated.

According to a second embodiment of the invention, there is provided an apparatus for the cooling of particulates which comprises a housing containing a multiplicity of parallel, horizontally spaced, vertical, expanded heat exchanger plates having passages therebetween, each plate having continuous flow channels for cooling fluid therein, a fluid inlet and a fluid outlet attached to said flow channels for each plate; a common cooling fluid inlet header connected to the inlets of the multiplicity of plates; a common cooling fluid outlet header connected to the outlets of the multiplicity of plates; means for feeding cooling fluid to said inlet header; means for discharging cooling fluid from said outlet header; a feed hopper for feeding particulates to said passages, said feed hopper being positioned above and attached to said housing and in communication with said passages; a discharge hopper for receiving particulates from said passages, said discharge hopper being positioned below and attached to said housing and in communication with said passages; said discharge hopper containing means for discharging particulates therefrom; and control means for controlling the discharging of particulates from said discharge hopper whereby the plates are maintained in a flooded stated with respect to particulates therebetween to substantially eliminate attrition and abrasion of particles.

According to preferred embodiments, the discharge hopper comprises two adjacent parallel tapered bins each having a side comprising a swinging section for allowing the discharging of particulates from said discharge hopper; the means for controlling the discharging of particulates from the discharge hopper is an actuator operatively connected to the swinging sections, said actuator being activated by a level control means positioned in said feed hopper; the particulates comprise particulate fertilizers chosen from the group consisting of urea, ammonium nitrate, phosphates, ammonium phosphates, ammonium sulfate, potash and mixtures thereof; and the cooling fluid is water.

## BRIEF DESCRIPTION OF THE DRAWINGS

The objects of the invention and the manner in which they are attained will become clear from the following detailed description with reference to the accompanying drawings, wherein:

Figure 1 is an isometric view of the cooler apparatus of the invention;

Figure 2 is an exploded isometric view of the apparatus of the invention with the housing removed to show the heat exchanger plates;

Figure 3 is a plan view of the heat exchanger plates with removable rear panel;

Figure 4 is a vertical section taken along line 4-4 of Figure 1 and showing the bottom hopper in elevation partly cut away;

Figure 5 shows a typical heat exchanger plate, as well as the welding pattern;

Figure 6 is a partial section through a typical heat exchanger plate;

Figure 7 is an isometric view of the discharge hopper;

Figure 8 is a vertical section through the discharge hopper at line 8-8 of Figure 7;

Figure 9 is an end view of the exterior of the discharge hopper showing a part of the discharge control means; and

Figure 10 is an enlarged section of a portion of the discharge control means inside the discharge hopper shown in Figure 7.

3

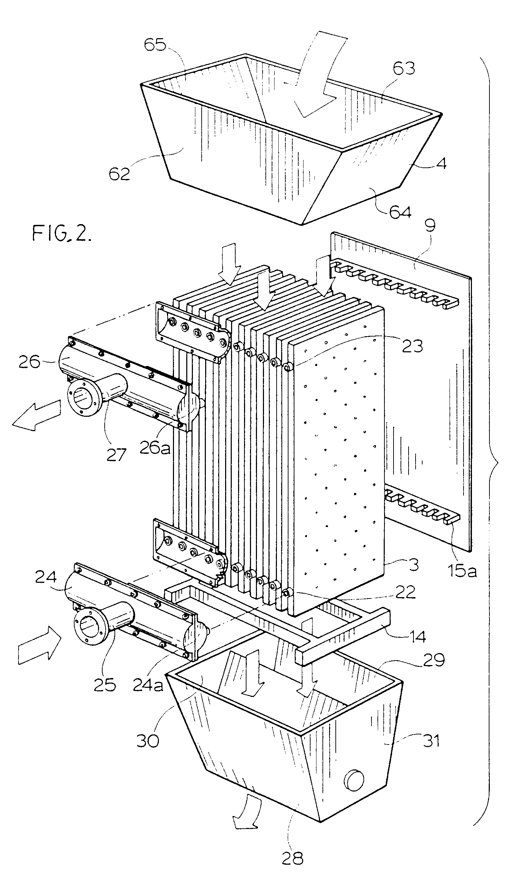

In Figures 2, 3 and 4, the thickness of the heat exchanger plates has been exaggerated for illustrative purposes.

## DETAILED DESCRIPTION OF THE INVENTION

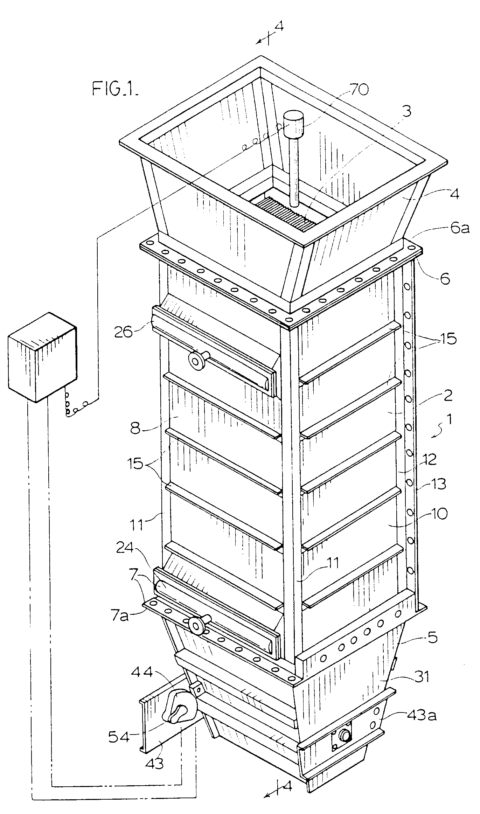

With reference to Figures 1, 2 and 3 the cooler generally indicated at 1 comprises a housing 2 containing a multiplicity of heat exchanger plates 3, a feed hopper 4 and a discharge hopper 5. Feed hopper 4 and discharge hopper 5 are attached at the upper and lower extremities of housing 2 and have a common centre line with the housing. The dimensions of the bottom opening of feed hopper 4, of the top opening of discharge hopper 5 and of the top and bottom openings of housing 2 are the same.

The housing 2 has a generally square or rectangular cross section and comprises a front panel 8, a back panel 9 and two side panels 10. Front panel 8 is attached to and between two corner posts 11 (angle irons). Side panels 10 are each attached to and between a corner post 11 and a corner post 12 (angle iron) such that one side of a corner post 12 is perpendicular to side panels 10 and forms a flange 13 which has means for the removable attachment of back panel 9. The upper extremity of housing 2 has a horizontal circumferential flange 6 for attachment to feed hopper 4, and the lower extremity has a similar, horizontal circumferential flange 7 for attachment to discharge hopper 5, as shown in Figure 1.

Mounted inside housing 2 is a pack of a multiplicity of vertically positioned, parallel, spaced, expanded heat exchanger plates 3. The pack is supported on support bars 14 that have a small horizontal cross section to provide minimum obstruction and are mounted at the lower extremity of and in housing 2. The pack of plates substantially fills housing 2 leaving only a narrow space between the pack and the panels of the housing. Sufficient space is provided between pack and flanges 6 and 7 to allow the extracting and inserting of one or more plates from the pack after backpanel 9 and headers 24 and 26 (to be described) have been removed from housing 2.

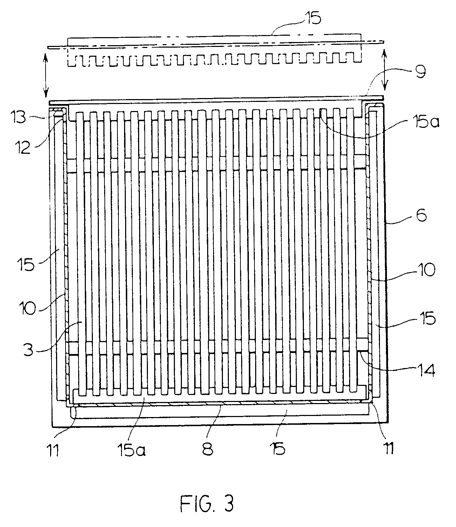

A number of support angles 15, preferably equally spaced, are attached on the outside of panels 8, 9 and 10 essentially between posts 11, between posts 11 and posts 12, and between posts 12, respectively. As shown in Figure 3, the plates 3 of the pack are evenly spaced in and by notched spacing bars 15a that are welded to corner posts 11 on the inside of front panel 8 and are welded against back panel 9, in positions opposite the exterior support angles 15.

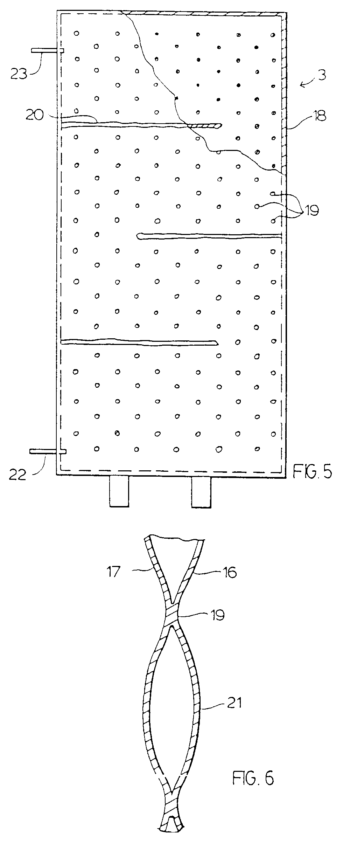

With reference to Figures 5 and 6, expanded heat exchanger plate 3 consists of two plates 16 and 17 that are welded together around and at their peripheries 18. Both plates 16 and 17 are also spot-welded together over their entire surface in a preferably regular pattern at a multitude of points 19, and are seam-welded at a number of lines 20, each seam weld extending partly and alternately from one side to the other side of a plate. The spaces between the spot welds at points 19 and between the spot welds and the seam welds at lines 20 are mechanically expanded, such as, for example, by hydraulic expansion to form interconnected continuous flow channels through the pillow-like expansions 21 between spot welds and in a serpentine path defined by the seam welds of lines 20 and peripheral weld 18. Alternatively, plates 16 and 17 may be mechanically embossed prior to peripheral welding together to form the mechanically expanded heat exchanger plates 3. An inlet 22 for cooling fluid is appropriately attached with one of its ends to the lower end, and an outlet 23 for cooling fluid is similarly attached to the upper end of each of heat exchanger plates 3. With reference to Figures 1 and 2, the inlets 22 and the outlets 23 pass through front panel 8 of housing 2 and are seal welded at their distal ends into openings (not shown) in the rear halves 24a and 26a of common cooling fluid inlet header 24 and common cooling fluid outlet header 26, respectively. Inlet header 24 and outlet header 26 are mounted on the outside of front panel 8 of housing 2 and are connected to fluid supply and discharge lines (not shown) by means of short, flanged inlet and outlet pipes 25 and 27 respectively, centrally mounted on the respective headers 24 and 26. The welded attachment of inlets 22 and outlets 23 into headers 24 and 26 allows removal of one or more plates 3 from housing 2 after headers 24 and 26 have been split open, the seal welds at the distal ends of inlets 22 and outlets 23 have been ground off, and back panel 9 has been removed from housing 2 (Figure 3).

Feed hopper 4 (see Figures 1 and 2) has vertically positioned trapezoid-shaped front and rear panels 62 and 63, respectively, and sloping side panels 64 and 65. Feed hopper 4 is open at its top and bottom and is made of angle irons at all of its sides with panels 62, 63, 64 and 65 attached to the angle irons. The angle irons at the lower end of hopper 4 form a circumferential flange 6a that matches flange 6 of housing 2 for attachment thereto. The slope of the side panels 64 and 65 of the feed hopper is greater than the angle of repose of the particulates such that particulates can be easily fed into feed hopper 4.

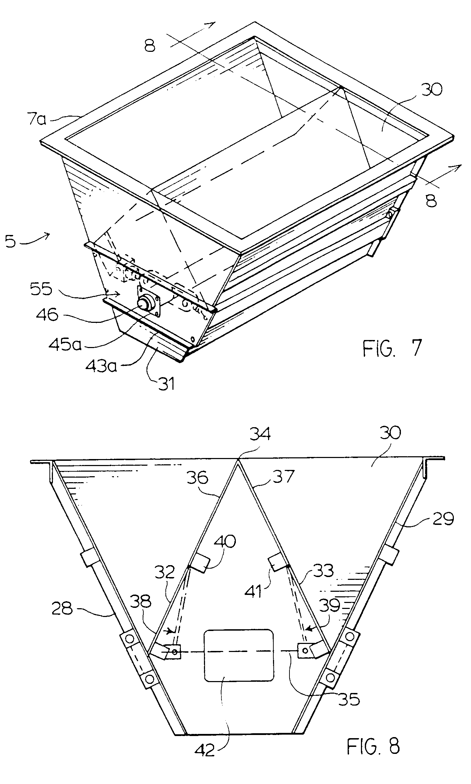

With reference to Figures 7-9, discharge hopper 5, open at its top and bottom, has a cross section of an inverted, truncated isosceles triangle in the direction parallel to heat exchanger plates 3. The top of discharge hopper 5 is provided with a circumferential flange 7a that matches flange 7 of housing 2 for attachment thereto.

Discharge hopper 5 has two sloping side walls 28 and 29 and two opposite, parallel, vertical end walls 30 and 31.

Discharge hopper 5 is divided into two parallel bins by means of two panels generally indicated at 32 and 33 contained between vertical end walls 30 and 31 and connected at their top edges at seamweld 34. Seamweld 34 is located on the intersection between the vertical centre line of hopper 5 and the base line of its truncated isosceles triangle cross sections. Panel 32 forms one bin with side wall 28, and panel 33 forms the other bin with side wall 29. The cross section of each bin, as shown in Figure 8, is an inverted isosceles triangle with base angles preferably the same as the base angles of the truncated isosceles triangle of the cross section of discharge hopper 5. When the angles are the same, the cross section contained between panels 32 and 33 form an isosceles triangle, its baseline schematically indicated with interrupted line 35, congruent with the isosceles triangles formed between panels 32 and 33 and side walls 28 and 29, respectively. Panels 32 and 33 comprise an upper fixed portion 36 and 37, respectively, that is seam welded between end walls 30 and 31, and a lower swinging section 38 and 39, respectively. Upper fixed portions 36 and 37 have a bracket 40 and 41, respectively, in the form of hollow square tubing, welded at the lower edge. The swinging sections 38 and 39 can swing towards each other from brackets 40 and 41 over a controlled distance thereby forming two elongated discharge openings between the swinging sections 38 and 39 and respective sidewalls 28 and 29 as shown more clearly in Figure 8. The extent of swing determines the width of the openings and, thereby, the rate of discharge of particulates from discharge hopper 5. End walls 30 and 31 each contain an opening 42 located on the vertical centre line of hopper 5 and substantially in the center of baseline 35.

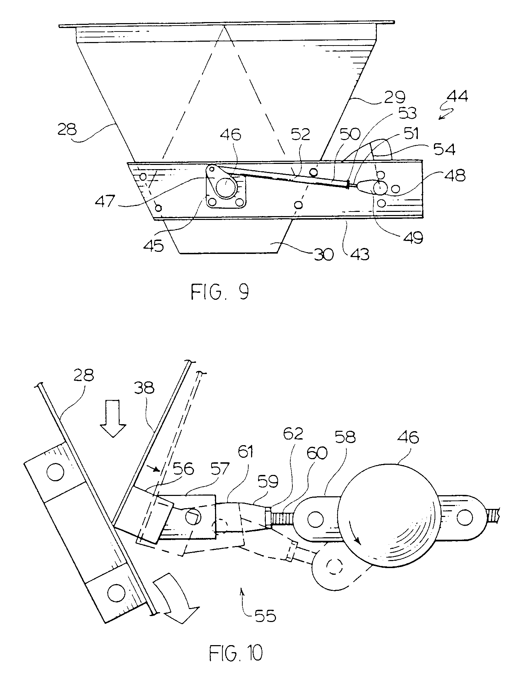

With particular reference to Figures 9 and 10, a channel iron 43 extending from sloping side wall 28 to well past side wall 29 is suitably attached such as by bolts to the outside of end wall 30. Channel iron 43 accommodates the particulates discharge control means or actuator, generally indicated with 44, that controls the opening and closing of swinging sections 38 and 39 and, thereby, the amount and rate of particulates discharge from discharge hopper 5.

Channel iron 43 has an opening (not shown) that corresponds with but is smaller than opening 42 in end wall 30. The opening in channel iron 43 is closed with a suitably attached flange bearing 45 adapted to accommodate a rotatable horizontal axle 46 passing through the bearing. The axle 46 extends horizontally from just outside flange bearing 45 to end wall 31 at the other end of the discharge hopper where the axle is similarly rotatably supported in the centre of a flange bearing 45a on a channel iron 43a over an opening 42 in wall 31 (Figure 7).

An eccentric hub 47 is keyed onto the end of axle 46 that extends from flange bearing 45. A short actuator shaft 48 passes through channel iron 43 on its horizontal centre line and in the portion of channel iron 43 that extends past sloping side wall 29. A small eccentric hub 49 is keyed or welded onto short actuator shaft 48 at the same side of channel iron 43 as eccentric hub 47. Actuator link rod 50 is pivotally attached at its ends between the outer extremities of eccentric hubs 47 and 49. The length of actuator link rod 50 is adjustable such as by providing a threaded portion 51 of link rod 50 which portion can screw into the main portion 52 and can be secured with lock nut 53.

On the other side of channel iron 43 the short actuator shaft 48 has an actuator arm 54 that is part of actuator 44 and is keyed thereon. By moving actuator arm 54, short actuator shaft 48 may be rotated. The movement of actuator arm 54 may be done manually but is, preferably, controlled by a signal obtained from a level controller depicted by numeral 70 centrally positioned in the top of feed hopper 4. Such level controller, which may, for example, be a capacitance probe, measures and controls the level of particulates in feed hopper 4 and is operatively connected with actuator arm 54. An electric signal from the probe is translated into a pneumatic signal from the controller 70 to the actuator 44, where the pneumatic signal is translated into mechanical movement, if required, to move actuator arm 54.

The axle 46 is operatively linked to both swinging sections 38 and 39 inside discharge hopper 5 by means of one or more pairs of longitudinally spaced linkages 55, one half of which is most clearly shown in Figure 10. The linkages of a pair are mounted on axle 46 opposite each other in opposite directions and connected with swinging sections 38 and 39 respectively. Preferably, two pairs are provided, each positioned near the opposite ends of axle 46 such that the swinging sections 38 and 39 can be effectively and uniformly operated. Each linkage 55 consists of a bar 56 attached to the lower edge of swinging sections 38 and 39. Bar 56 has two parallel, spaced-apart lobes 57 attached thereto. Two parallel spaced-apart lobes 58 are attached to axle 46. An axle link 59 is pivotally connected between lobes 57 and lobes 58. The length of link 59 is adjustable such as by providing a threaded portion 60 of link 59 which portion can screw into the main portion 61 and can be secured with locknut 62.

In the operation of the method according to the invention, particulates are fed into the feedhopper 4 of cooler 1. The particulates can be any solid particulates that require cooling and have characteristics that will allow the particulates to descend from feedhopper 4 to the discharge hopper 5 past and between the expanded heat exchanger plates 3 positioned in housing 2. For proper operation of the cooler, the particulates to be cooled should be substantially free flowing and should have a moisture content that does not interfere with the free flow of particulates through the cooler. If necessary, the particulates may be subjected to drying prior to cooling. The cooler is particularly useful for the cooling of fertilizer particulates chosen from the group consisting of urea, ammonium nitrate, phosphates, ammonium phosphates, ammonia sulfate, potash and mixtures of one or more of these compounds. The caking of fertilizer particulates is an often occurring problem. For example, caking of urea particulates is due to an excessively hot product, especially experienced in warm climates. When the product is too warm the particulates "sinter" together when piled up in storage. To avoid this problem the urea particulates should be cooled to about 45°C or lower. Similar problems exist to a greater or lesser extent with other fertilizer particulates and one of the solutions to the problems may be the cooling method of the present invention.

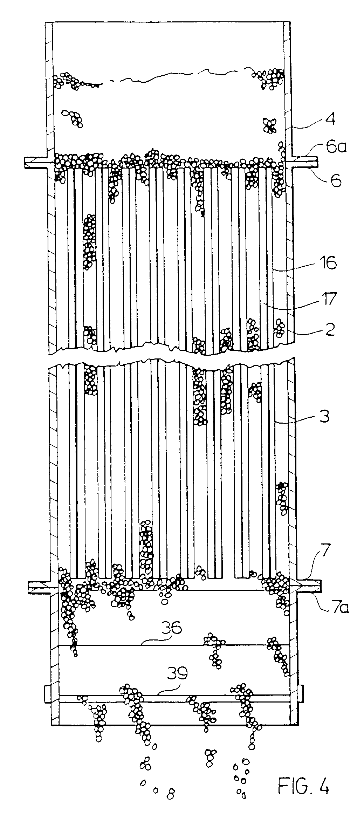

When feeding particulates into feed hopper 4, the material should be evenly distributed over the cross section of the housing so that the cooler is operated in a flooded state, as shown in Figure 4. A flooded state is required to ensure that the maximum cooling capacity of the exchanger is used at all times and that mass flow conditions exist in the cooler. This is easily accomplished by maintaining feed hopper 4 filled to a certain desired level that is controlled by level controller 70 positioned in feed hopper 4. The controller, such as a capacitance probe, is operatively connected with the actuator 44 that controls the rate of discharge of the particulates from the discharge hopper 5. The particulates flow in mass flow by gravity past the heat exchanger plates 3 and are cooled during their passage between the plates. A suitable cooling fluid is fed from a source through inlet pipe 25 into common header 24 wherein the fluid is distributed to the inlets 22 of the plates. The flow of cooling fluid is substantially counter current to the direction of flow of the particulates. The fluid flows through the multitude of flow channels of the interconnected pillow-like expansions 21 in a serpentine way defined by seam welds 20 to the outlets 23 and is discharged via common header 26 and outlet pipe 27 to a fluid discharge line.

The suitable cooling fluid may be a gas or a liquid, the latter being preferred, and is chosen such that the desired degree of cooling of the particulates is realized. The preferred cooling liquid is water.

It is noted that the outside surfaces of the heat exchanger plates are substantially smooth to prevent any hang-up of the particulates as they move past it.

The cooled particulates pass from between the heat exchanger plates into the bins of the discharge hopper 5 from which they are discharged at a controlled rate. The angle of the walls of the bins in the discharge hopper is chosen to ensure that mass flow of the particulates in the cooler is maintained. The optimum angle is generally specific to the material being cooled and it may, therefore, be necessary to adapt the discharge hopper to the angle that is optimum for that material.

The invention will now be illustrated by means of the following non-limitative example.

Example

A cooler was built and operated according to the invention for the cooling of urea particulates.

The cooler had a feed hopper with a height of 61 cm, a housing with a height of 267 cm and a discharge hopper with a height of 96 cm. The cross section of the housing measured 140 x 149 cm. The angles of the sloping side walls and the panels of the discharge hopper from the vertical were 25°.

The housing contained 52 mechanically expanded heat exchanger plates arranged vertically 1.9 cm apart (2.5 cm centres). The heat exchanger plates were made of 18 gauge stainless steel sheets, 244 cm x 122 cm, seam-welded along their edges, spot-welded in a regular 4.1 x 3.6 cm rectangular pattern and seam-welded along five lines partly extending from one vertical side of a plate to the other in alternate fashion and 39.2 cm apart. The interconnected pillow-like expansions had a cross sectional thickness of 0.6 cm.

Urea particulates at a temperature of 54.9°C were fed into the feed hopper from two screen sets at a rate of 20,450 kg/h and were discharged from the discharge hopper at the same rate. The feed volume to the cooler from the first set of screens was 51.6% and from the second set 48.4% of the total weight of feed. The cooler was maintained in flooded condition and a mass flow regime existed at all times. Cooling water at a temperature of 20.9 °C was pumped at a rate of 55,100 l/h through the heat exchanger plates and discharged from the cooler at 24.3 °C. The temperature of the discharged urea was 32.0 °C. No degradation or attrition of urea occurred in the cooler as is obvious when comparing the screen analyses of feed and product as shown in Table I.

EP 0 444 338 B1

TABLE I

| Tylor Sieve Series Mesh Size | Mesh Width mm | Feed from Screen 1 % | Feed from Screen 2 % | Combined Feed % | Actual Product % |
|---|---|---|---|---|---|
| 6 | 3.36 | 0.3 | 0.6 | 0.4 | 0.4 |
| 7 | 2.83 | 13.9 | 24.8 | 19.2 | 19.1 |
| 8 | 2.38 | 64.8 | 86.9 | 75.5 | 75.5 |
| 9 | 2.00 | 91.1 | 97.8 | 94.3 | 94.4 |
| 10 | 1.68 | 97.3 | 99.6 | 98.4 | 98.7 |
| 12 | 1.41 | 99.6 | 99.9 | 99.7 | 99.8 |
| 14 | 1.19 | 99.9 | 00.0 | 99.9 | 99.9 |

The present invention has a number of important advantages. Because particulates descend in a mass flow regime by gravity through the cooler no agitation or turbulence occurs in the material in the cooler. As a consequence, no abrasive conditions exist, essentially no attrition or abrasion occurs, and the cooled particulates are substantially free of fines and dust, i.e., contain substantially no more fines and dust than were contained in the feed to the cooler. No screening or dust control equipment is, therefore, required. As no air is used to effect cooling, no contamination occurs that would require additional means for its elimination. The cooler is simple to maintain and costs considerably less than, e.g., a fluidized bed cooler of equivalent capacity.

## Claims

1. A method for the cooling of particulates characterized by passing particulates to be cooled downward by gravity between at least two parallel, spaced heat exchanger plates (3); passing a suitable cooling fluid through said plates (3); collecting particulates after passing between said plates (3); and maintaining said plates (3) in a flooded state with respect to particulates therebetween whereby attrition and abrasion of particulates are substantially eliminated.

2. A method as claimed in claim 1, characterized in that said cooling fluid is passed through said plates (3) in a direction substantially countercurrent to the downward direction of the particulates.

3. A method as claimed in claim 1 or 2, characterized in that said particulates are fertilizer particulates.

4. A method as claimed in claim 3, characterized in that said fertilizer particulates comprise one or more fertilizers chosen from urea, ammonium nitrate, phosphates, ammonium phosphates, ammonium sulfate, potash and mixtures thereof.

5. A method as claimed in any preceding claim, characterized in that said cooling fluid is a liquid, preferably water.

6. An apparatus for the cooling of particulates characterized by a housing (2) containing a multiplicity of parallel, horizontally spaced, vertical heat exchanger plates (3) having passages therebetween, each plate having continuous flow channels for cooling fluid therein, a fluid inlet (22) and a fluid outlet (23) in communication with said flow channels for each plate (3); a common cooling fluid inlet header (24) connected to the inlets (22) of the multiplicity of plates (3); a common cooling fluid outlet header (26) connected to the outlets (23) of the multiplicity of plates (3); means (25) for feeding cooling fluid to said inlet header (24); means (27) for discharging cooling fluid from said outlet header (26); a feed hopper (4) for feeding particulates to said passages, said feed hopper (4) being positioned above and attached to said housing (2) and in communication with said passages; a discharge hopper (5) for receiving particulates from said passages, said discharge hopper (5) being positioned below and attached to said housing (2) and in com-

EP 0 444 338 B1

munication with said passages; said discharge hopper (5) containing means for discharging particulates therefrom; and control means (44) for controlling the discharging of particulates from said discharge hopper (5) whereby said passages are maintained in a flooded state with respect to the particulates therein.

7. An apparatus as claimed in claim 6, characterized in that said fluid inlet (22) is below said fluid outlet (23).

8. An apparatus as claimed in claim 6 or 7, characterized in that said discharge hopper (5) comprises two adjacent parallel tapered bins (32,28;33,29) each having a side (32;33) comprising a swinging section (38;39) for allowing the discharging of particulates from said discharge hopper (5).

9. An apparatus as claimed in claim 8, characterized in that said means (44) for controlling the discharging of particulates from the discharge hopper is an actuator (44) operatively connected to said swinging sections (38;39).

10. An apparatus as claimed in claim 6, 7, 8 or 9, characterized in that a level control means (70) is positioned in said feed hopper (4) and said actuator (44) is operatively connected to and activated by said level control means (70).


**Patentansprüche**

1. Verfahren zum Kühlen von Teilchengut, dadurch gekennzeichnet, daß das zu kühlende Teilchengut unter Schwerkrafteinfluß zwischen mindestens zwei parallelen, beabstandeten Wärmetauscherplatten (3) abwärts geführt wird, ein geeignetes Kühlfluid durch die Platten (3) geleitet wird, das Teilchengut nach dem Durchgang zwischen den Platten (3) gesammelt oder aufgefangen wird und die Platten (3) bezüglich des dazwischen befindlichen Teilchenguts in einem "gefluteten" (bzw. vollgefüllten) Zustand gehalten werden, wodurch Abscheuern oder Abrieb des Teilchenguts im wesentlichen ausgeschaltet wird.

2. Verfahren nach Anspruch 1, dadurch gekennzeichnet, daß das Kühlfluid durch die Platten (3) im wesentlichen in einer Gegenstromrichtung zur Abwärtsrichtung des Teilchenguts geleitet wird.

3. Verfahren nach Anspruch 1 oder 2, dadurch gekennzeichnet, daß das Teilchengut aus Düngemittel-Feststoffteilchen besteht.

4. Verfahren nach Anspruch 3, dadurch gekennzeichnet, daß die Düngemittel-Feststoffteilchen ein oder mehrere Düngemittel aus der Gruppe Harnstoff, Ammoniumnitrat, Phosphate, Ammoniumphosphate, Ammoniumsulfat, Pottasche und Gemische derselben aufweisen.

5. Verfahren nach einem der vorangehenden Ansprüche, dadurch gekennzeichnet, daß das Kühlfluid eine Flüssigkeit, vorzugsweise Wasser ist.

6. Vorrichtung zum Kühlen von Teilchengut, gekennzeichnet durch ein Gehäuse (2), das eine Vielzahl von parallelen, waagerecht voneinander beabstandeten, lotrechten Wärmetauscherplatten (3) enthält, die zwischen sich Durchgänge aufweisen, wobei jede Platte in ihrem Inneren ununterbrochene Strömungskanäle für Kühlfluid und je einen mit den Strömungskanälen in Verbindung stehenden Fluideinlaß (22) und Fluidauslaß (23) für jede Platte (3) aufweist, einen mit den Einlässen (22) der zahlreichen Platten (3) verbundenen gemeinsamen Kühlfluid-Einlaßverteiler (24), einen mit den Auslässen (23) der zahlreichen Platten (3) verbundenen gemeinsamen Kühlfluid-Auslaßsammler (26), Mittel (25) zum Zuspeisen von Kühlfluid zum Einlaßverteiler (24), Mittel (27) zum Austragen von Kühlfluid aus dem Auslaßsammler (26), einen Fülltrichter (4) zum Einbringen von Teilchengut bzw. Feststoffteilchen in die Durchgänge, wobei der Fülltrichter (4) über dem Gehäuse (2) angeordnet und an ihm angebracht ist und mit den Durchgängen in Verbindung steht, einen zum Aufnehmen des Teilchenguts aus den Durchgängen dienenden Austragtrichter (5), der unter dem Gehäuse (2) angeordnet und an diesem angebracht ist und mit den Durchgängen in Verbindung steht, wobei der Austragtrichter (5) Mittel zum Austragen des Teilchenguts aus ihm aufweist, und eine Steuereinheit (44) zum Steuern des Austragens des Teilchenguts aus dem Austragtrichter (5), wobei die Durchgänge bezüglich des darin enthaltenen Teilchenguts in einem "gefluteten" (vollgefüllten) Zustand gehalten werden.

7. Vorrichtung nach Anspruch 6, dadurch gekennzeichnet, daß der Fluideinlaß (22) unterhalb des Fluidauslasses (23) liegt.

**8.** Vorrichtung nach Anspruch 6 oder 7, dadurch gekennzeichnet, daß der Austragtrichter (5) zwei benachbarte, parallele, sich verjüngende Behälter (32, 28; 33, 29) umfaßt, die jeweils eine Seite (32; 33) mit einem Schwenkabschnitt (38; 39), um den Austrag des Teilchenguts aus dem Austragtrichter (5) zu gestatten, aufweisen.

**9.** Vorrichtung nach Anspruch 8, dadurch gekennzeichnet, daß die Einheit (44) zum Steuern des Austragens des Teilchenguts aus dem Austragtrichter ein mit den Schwenkabschnitten (38; 39) wirkungsmäßig verbundener Stelltrieb (44) ist.

**10.** Vorrichtung nach einem der Ansprüche 6, 7, 8 oder 9, dadurch gekennzeichnet, daß im Fülltrichter (4) eine Füllstandreglereinheit (70) angeordnet ist und der Stelltrieb (44) mit der Füllstandreglereinheit (70) wirkungsmäßig verbunden und durch diese aktivierbar ist.

## Revendications

**1.** Procédé de refroidissement de particules, caractérisé en ce qu'on fait passer les particules à refroidir vers le bas par gravité entre au moins deux plaques (3) espacées parallèles formant échangeur de chaleur, on fait passer un fluide de refroidissement adapté à travers lesdites plaques (3), on collecte les particules après leur passage entre lesdites plaques (3), on maintient lesdites plaques (3) dans un état immergé par rapport aux particules situées entre elles de telle sorte que le frottement et l'abrasion des particules soient à peu près éliminés.

**2.** Procédé selon la revendication 1, caractérisé en ce que ledit fluide de refroidissement passe à travers lesdites plaques (3) dans une direction à peu près à contre courant par rapport à la direction de déplacement des particules vers le bas.

**3.** Procédé selon la revendication 1 ou 2, caractérisé en ce que lesdites particules sont des particules d'engrais.

**4.** Procédé selon la revendication 3, caractérisé en ce que lesdites particules d'engrais sont constituées d'un ou de plusieurs engrais choisis parmi l'urée, le nitrate d'ammonium, les phosphates, les phosphates d'ammonium, le sulfate d'ammonium, la potasse et des mélanges de ceux-ci.

**5.** Procédé selon l'une quelconque des revendications précédentes, caractérisé en ce que ledit fluide de refroidissement est un liquide, de préférence de l'eau.

**6.** Dispositif de refroidissement de particules, caractérisé en ce qu'il comporte un boîtier (2) contenant plusieurs plaques verticales (3) parallèles espacées horizontalement formant échangeur de chaleur, ayant des passages agencés entre elles, chaque plaque ayant des canaux d'écoulement continu pour le fluide de refroidissement qui y est contenu, une entrée de fluide (22) et une sortie de fluide (23) en communication avec lesdits canaux d'écoulement de chaque plaque (3), un collecteur (24) commun d'entrée de fluide de refroidissement relié aux entrées (22) des plusieurs plaques (3), un collecteur commun (26) de sortie de fluide de refroidissement relié aux sorties (23) des plusieurs plaques (3), des moyens (25) pour alimenter du fluide de refroidissement jusqu'audit collecteur d'entrée (24), des moyens (27) pour décharger du fluide de refroidissement à partir dudit collecteur de sortie (26), une trémie d'alimentation (4) pour alimenter des particules jusqu'audit passage, ladite trémie d'alimentation (4) étant située au-dessus dudit boîtier (2) et y étant fixée et étant en communication avec lesdits passages, une trémie de décharge (5) pour recevoir les particules provenant desdits passages, ladite trémie de décharge (5) étant située au-dessous dudit boîtier (2) et y étant fixée et étant en communication avec lesdits passages, ladite trémie de décharge (5) contenant des moyens pour décharger les particules à partir de celle-ci, et des moyens de commande (44) pour commander la décharge des particules à partir de ladite trémie de décharge (5) de telle sorte que lesdits passages soient maintenus dans un état immergé par rapport aux particules qui y sont situées.

**7.** Dispositif selon la revendication 6, caractérisé en ce que l'entrée de fluide (22) est située au-dessous de ladite sortie de fluide (23)

8. Appareil selon la revendication 6 ou 7, caractérisé en ce que ladite trémie de décharge (5) comporte deux réservoirs (32, 28; 33, 29) coniques parallèles ayant chacun un côté (32; 33) comportant une partie basculante (38; 39) pour permettre le déchargement des particules à partir de ladite trémie de décharge (5).

9. Appareil selon la revendication 8, caractérisé en ce que lesdits moyens (44) de commande de la décharge des particules à partir de la trémie de décharge est un actionneur (44) relié de manière active auxdites parties basculantes (38;39).

10. Appareil selon la revendication 6, 7, 8 ou 9, caractérisé en ce qu'un moyen (70) de commande de niveau est situé dans ladite trémie d'alimentation (4) et ledit actionneur (44) est relié de manière active audit moyen (70) de commande de niveau et est actionné par ce dernier.

FIG.1.

FIG. 2.

FIG. 3

FIG. 4

FIG. 5

FIG. 6

FIG. 7

FIG. 8

EP 0 444 338 B1

FIG. 9

FIG. 10

17